# EUROPÄISCHE PATENTSCHRIFT

(11) **EP 2 558 685 B1**
(45) Veröffentlichungstag und Bekanntmachung des Hinweises auf die Patenterteilung: **27.09.2017**
(21) Anmeldenummer: 11725309.6
(22) Anmeldetag: 07.04.2011
(51) Int. Cl.: F04D 29/54, F01D 5/14, F01D 9/04

(54) **LEITSCHAUFEL**
GUIDE VANE
AUBE DIRECTRICE

(30) Priorität: 10.04.2010 DE 102010014556
(43) Veröffentlichungstag der Anmeldung: 20.02.2013
(73) Patentinhaber: MTU Aero Engines AG, 80995 München (DE)
(72) Erfinder: ELORZA GOMEZ, Sergio, 80997 München (DE)
(74) Vertreter: Schlotter, Alexander Carolus Paul
(86) Internationale Anmeldenummer: PCT/DE2011/000375
(87) Internationale Veröffentlichungsnummer: WO 2011/124214

(56) Entgegenhaltungen:
- EP-A2- 2 103 783
- DE-A1-102008 055 824
- DE-T2-602004 001 531
- US-B1- 6 195 983

## Beschreibung

Die Erfindung betrifft eine Leitschaufel nach dem Oberbegriff des Anspruchs 1.

Ein Verdichter einer Gasturbinez verfügt über einen Stator sowie über einen Rotor. Zum Stator gehören ein Gehäuse sowie statorseitige Leitschaufeln. Zum Rotor gehört ein Rotorgrundkörper sowie zusammen mit dem Rotorgrundkörper rotierende Laufschaufeln.

Eine statorseitige Leitschaufel verfügt über ein Schaufelblatt, wobei das Schaufelblatt durch eine Strömungseintrittskante, eine Strömungsaustrittskante, eine Saugseite und eine Druckseite definiert wird. Radial außen grenzt das Schaufelblatt einer Leitschaufel an das statorseitige Gehäuse an und ist vorzugsweise über einen Schaufelfuß am statorseitigen Gehäuse befestigt. Radial innen grenzt ein Ende bzw. eine Spitze einer innendeckbandlosen Leitschaufel an eine Nabe eines Rotorgrundkörpers an, wobei zwischen der Nabe des Rotorgrundkörpers und dem radial innen liegenden Ende der innendeckbandlosen Leitschaufel ein sogenannter Laufspalt ausgebildet ist.

Aus der Praxis bekannte Leitschaufeln werden durch Schaufelabschnitte gebildet bzw. definiert, die in Radialrichtung der Leitschaufel gesehen aufeinander bzw. übereinander gestapelt sind. Die Schwerpunkte dieser Schaufelabschnitte verlaufen dabei entlang einer sogenannten Stapelachse, wobei bei aus der Praxis bekannten Leitschaufeln die Stapelachse ungekrümmt oder stetig gekrümmt im Wesentlichen in Radialrichtung verläuft. Bei einer solchen Leitschaufel, der kein Innendeckband zugeordnet ist, nehmen Verluste in der Nähe der Rotornabe mit der Höhe des Laufspalts stark zu, wodurch sich Einbußen für den Wirkungsgrand ergeben. Dies ist von Nachteil.

Aus der US 6,195,983 B1 ist eine Leibschaufel nach dem Oberbegeiff des Auspruchs 1 bekannt.

Aus der DE 10 2008 055 824 A1 ist eine Dampfturbine mit Leitschaufeln mit wechseluden Pleilungs winkelu bekannt.

Aus der DE 60 2004 001 531 T1 ist eine Stator schaufel mit Doppel kreimanung bekannt.

Hiervon ausgehend liegt der vorliegenden Erfindung das Problem zu Grunde, eine neuartige Leitschaufel zu schaffen.

Dieses Problem wird durch eine Leitschaufel gemäß Anspruch 1 gelöst. Erfindungsgemäß sind die Schaufelblattabschnitte derart in Radialrichtung aufeinander gestapelt, dass in einem sich an einen radial äußeren Abschnitt des Schaufelblatts anschließenden radial inneren Abschnitt des

Schaufelblatts die Stapelachse ihren einzigen Wendepunkt in ihrem radialen Krümmungsverlauf aufweist, nämlich zwischen einem ersten, radial inneren Teilabschnitt des radial inneren Abschnitts, in welchem die Stapelachse konkav zur Druckseite gekrümmt ist, und einem zweiten, radial äußeren Teilabschnitt des radial inneren Abschnitts, in welchem die Stapelachse konkav zur Saugseite gekrümmt ist.

Mit der hier vorliegenden Erfindung wird erstmals eine Leitschaufel mit einem innendeckbandlosen Schaufelblatt vorgeschlagen, mithilfe dessen sich statorseitige Verluste deutlich reduzieren lassen. Eine Strömung benachbart zu einer Rotornabe kann mithilfe der erfindungsgemäßen, statorseitigen Leitschaufel verbessert werden, wodurch der Gesamtwirkungsgrad insgesamt verbessert werden kann.

Im ersten, radial inneren Teilabschnitt des radial inneren Abschnitts ist die Stapelachse vorzugsweise konkav zur Druckseite der Leitschaufel gekrümmt.

Durch die Krümmung im ersten, radial inneren Teilabschnitt des radial inneren Abschnitts wird der Schaufelblattabschnitt, der sich unmittelbar an den Laufspalt anschließt, entlastet, wodurch Statorverluste verringert werden können.

Im zweiten, radial äußeren Teilabschnitt des radial inneren Abschnitts ist die Stapelachse vorzugsweise konkav zur Saugseite der Leitschaufel gekrümmt.

Durch die Krümmung im zweiten, radial äußeren Teilabschnitt des radial inneren Abschnitts werden insbesondere Strömungslinien in Richtung zur Nabe des angrenzenden Rotorgrundkörpers gedrückt, wodurch die Aerodynamik in der Nabennähe des Rotorgrundkörpers verbessert wird.

Nach der Erfindung nimmt in dem ersten, radial inneren Teilabschnitt des radial inneren Abschnitts die Neigung der Stapelachse von radial außen nach radial innen derart ab, dass im Bereich einer radial inneren Schaufelspitze, die zu einer Nabe eines Rotors durch einen Laufspalt beabstandet ist, die Stapelachse sich im Wesentlichen in Radialrichtung erstreckt. Hierdurch wird das Umlenkverhalten in der Nähe der Nabe des Rotorgrundkörpers verbessert, womit selbst bei relativ großen Laufspalten Verluste reduziert werden können.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

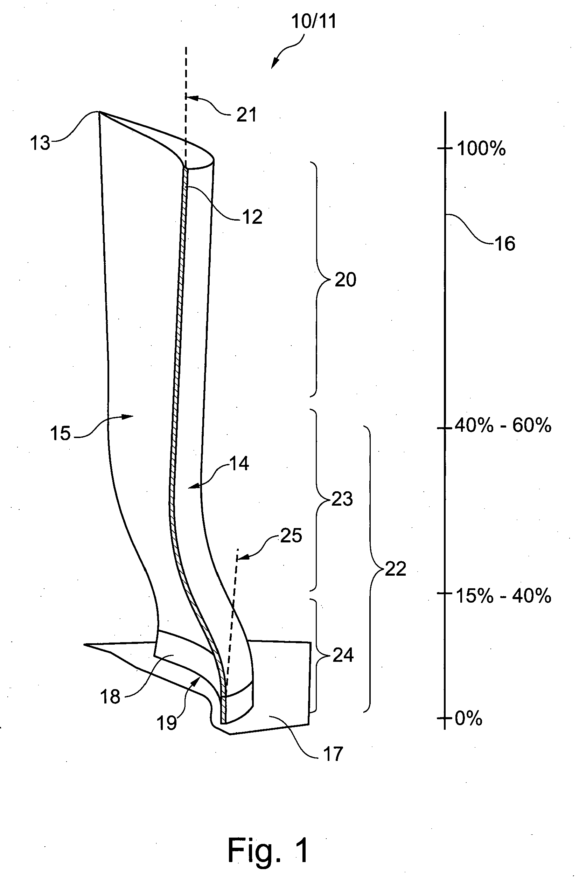

- Fig. 1: eine schematisierte Darstellung einer erfindungsgemäßen Leitschaufel

Die hier vorliegende Erfindung betrifft eine Leitschaufel eines Verdichters einer Gasturbine, wie zum Beispiel eines Gasturbinenflugtriebwerks. Bei einer solchen Leitschaufel handelt es sich um eine statorseitige Schaufel.

Fig. 1 zeigt stark schematisiert ein Schaufelblatt 10 einer erfindungsgemäßen, statörseitigen Leitschaufel 11, wobei das Schaufelblatt 10 von einer Strömungseintrittskante 12, einer Strömungsaustrittskante 13, einer Saugseite 14 und einer Druckseite 15 definiert wird.

Sowohl die Saugseite 14 als auch die Druckseite 15 erstrecken sich in Axialrichtung der Leitschaufel 11 gesehen zwischen der Strömungseintrittskante 12 und der Strömungsaustrittskante 13.

Das Schaufelblatt 10 der Leitschaufel 11 verfügt in Radialrichtung 16 über eine definierte Länge.

Radial außen bei 100% der radialen Länge des Schaufelblatts 10 grenzt die Leitschaufel 11 an ein nicht gezeigtes, statorseitiges Gehäuse an und ist im Gehäuse vorzugsweise über einen ebenfalls nicht gezeigten Schaufelfuß befestigt.

Radial innen bei 0% der radialen Länge des Schaufelblatts 10 der Leitschaufel 11 grenzt dieselbe an eine Nabe 17 eines Rotorgrundkörpers an, wobei das Schaufelblatt 10 der Leitschaufel 11 innendeckbandlos ausgebildet ist, sodass unmittelbar zwischen einer radial inneren Schaufelspitze 18 des Schaufelblatts 10 der Leitschaufel 11 und der Nabe 17 des Rotorgrundkörpers ein Laufspalt 19 ausgebildet ist.

Die statorseitige Leitschaufel 11, nämlich das Schaufelblatt 10 derselben, wird von einer Vielzahl von in Radialrichtung aufeinander gestapelten Schaufelblattabschnitten gebildet, deren Schwerpunkte entlang einer Stapelachse verlaufen.

Erfindungsgemäß sind die Schaufelblattabschnitte derart in Radialrichtung aufeinander gestapelt, dass in einem sich an einen radial äußeren Abschnitt 20 des Schaufelblatts 10 anschließenden radial inneren Abschnitt 22 des Schaufelblatts 11 die Stapelachse ihren einzigen Wendepunkt in ihrem radialen Krümmungsverlauf aufweist, nämlich zwischen einem ersten, radial inneren Teilabschnitt 24 des radial inneren Abschnitts 22, in welchem die Stapelachse zur Druckseite 15 der Leitschaufel 10 bzw. des Schaufelblatts 11 gekrümmt ist, und einem zweiten, radial äußeren Teilabschnitt 23 des radial inneren Abschnitts 22, in welchem die Stapelachse zur Saugseite 14 der Leitschaufel 10 bzw. des Schaufelblatts 11 gekrümmt ist. In dem ersten, radial inneren Teilabschnitt 24 des radial inneren Abschnitts 22 weist die Stapelachse demnach eine erste radiale Krümmung auf, nämlich in Richtung auf die Druckseite 15 des Schaufelblatts 10, nämlich konkav zur Druckseite 15. Im zweiten, radial äußeren Teilabschnitt 23 des radial inneren Abschnitts 22 weist die Stapelachse demnach eine zweite, zur ersten radialen Krümmung entgegen gesetzte radiale Krümmung auf, nämlich in Richtung auf die Saugseite 14, nämlich konkav zur Saugseite 14.

Zwischen der ersten radialen Krümmung der Stapelachse im ersten, radial inneren Teilabschnitt 24 des radial inneren Abschnitts 22 und der zweiten radialen Krümmung der Stapelachse im zweiten, radial äußeren Teilabschnitt 23 des radial inneren Abschnitts 22 ist ein einziger Wendepunkt ausgebildet, in welchem die erste radiale Krümmung in die zweite, entgegen gesetzte radiale Krümmung übergeht.

Dadurch wird im radial inneren Abschnitt 22 eine S-förmige Konturierung der Stapelachse des Schaufelblatts 10 der erfindungsgemäßen Leitschaufel bewirkt, wobei diese S-förmige Konturierung in Fig. 1 für die Strömungseintrittskante 12 sichtbar ist.

Nach einer vorteilhaften Weiterbildung der Erfindung erstreckt sich in dem radial äußeren Abschnitt 20 des Schaufelblatts 10 die Stapelachse im Wesentlichen in Radialrichtung, wobei dann dieselbe im Wesentlichen nicht gekrümmt ist. Dies ist im Ausführungsbeispiel der in Fig. 1 der Fall, welche die Radialrichtung der Strömungseintrittskante 12 im radial äußeren Abschnitt 20 des Schaufelblatts durch die gestrichelte Linie 21 visualisiert ist.

Im Unterscheid hierzu ist es jedoch auch möglich, dass die Stapelachse auch im äußeren Abschnitt 20 des Schaufelblatts 10 gekrümmt ist, nämlich wie im zweiten, radial äußeren Teilabschnitt 23 des radial inneren Abschnitts 22 in Richtung auf die Saugseite 14, insbesondere konkav zur Saugseite 14.

In dem ersten, radial inneren Teilabschnitt 24 des radial inneren Abschnitts 22 nimmt die Neigung der Stapelachse von radial außen nach radial innen derart ab, dass im Bereich einer radial inneren Schaufelspitze, die zur Nabe 17 des Rotors durch den Laufspalt 19 beabstandet ist, die Stapelachse sich im Wesentlichen in Radialrichtung erstreckt, wobei in Fig. 1 diese Radialrichtung im Bereich der Schaufelspitze 18 für die Strömungseintrittskante 12 durch eine gestrichelte Linie 25 visualisiert ist.

Der einzige Wendepunkt der Stapelachse, der zwischen dem ersten, radial inneren Teilabschnitt 24 des radial inneren Abschnitts 22 und dem zweiten, radial äußeren Teilabschnitt 23 des radial inneren Abschnitts 22 ausgebildet ist, liegt von radial innen nach radial außen gesehen vorzugsweise zwischen in etwa 15% und in etwa 40% der radialen Länge des Schaufelblatts 10.

Der erste, radial innere Teilabschnitt 24 des radial inneren Abschnitts 22 erstreckt sich von radial innen nach radial außen gesehen zwischen in etwa 0% und in etwa 40% der radialen Länge des Schaufelblatts 10, wobei sich der zweite, radial äußere Teilabschnitt 23 des radial inneren Abschnitts 22 von radial innen nach radial außen gesehen zwischen in etwa 15% und in etwa 60% der radialen Länge des Schaufelblatts 10 erstreckt. Der radial äußere Abschnitt 20 des Schaufelblatts 10, in welchem die Stapelachse insbesondere ungekrümmt sein kann, erstreckt sich von radial innen nach radial außen gesehen sich zwischen in etwa 40% und in etwa 100% der radialen Länge des Schaufelblatts erstreckt. Dann, wenn die Stapelachse auch im radial äußeren Abschnitt 20 des Schaufelblatts 10 gekrümmt ist, stellt der radial äußere Abschnitt 20 eine Verlängerung des zweiten, radial äußeren Teilabschnitts 23 des radial inneren Abschnitts 22 dar.

Wie bereits ausgeführt, ist das Schaufelblatt 10 der erfindungsgemäßen Leitschaufel als innendeckbandloses Schaufelblatt ausgebildet.

Durch die oben beschriebene Krümmung der Stapelachse des Schaufelblatts 10 im Bereich des zweiten, radial äußeren Teilabschnitts 23 des radial inneren Abschnitts 22 werden Stromlinien in Richtung auf die Nabe 17 des Rotors gedrückt und damit die Aerodynamik in Nabennähe verbessert.

Durch die oben beschriebene Krümmung der Stapelachse im Bereich des ersten, radial inneren Teilabschnitts 24 des radial inneren Abschnitts 22 wird der Schaufelbereich unmittelbar angrenzend an den Laufspalt 19 zusätzlich entlastet, womit die Statorverluste verringert werden können.

Das Umlenkverhalten in der Nähe der Nabe 17 wird durch die spezielle Konturierung der Stapelachse im Bereich der Schaufelspitze 18, die sich dort im Wesentlichen in Radialrichtung erstreckt, verbessert, womit Verluste selbst bei relativ großen Laufspalten 18 reduziert werden können.

## Patentansprüche

1. Leitschaufel eines Verdichters, wobei ein Schaufelblatt (10) derselben eine Strömungseintrittskante (12), eine Strömungsaustrittskante (13), eine Saugseite (14) und eine Druckseite (15) aufweist, wobei das Schaufelblatt (10) von einer Vielzahl von in Radialrichtung aufeinander gestapelten Schaufelblattabschnitten gebildet ist, deren Schwerpunkte entlang einer Stapelachse verlaufen,
wobei
die Schaufelblattabschnitte derart in Radialrichtung aufeinander gestapelt sind, dass in einem sich an einen radial äußeren Abschnitt (20) des Schaufelblatts (10) anschließenden radial inneren Abschnitt (22) des Schaufelblatts (10) die Stapelachse ihren einzigen Wende-punkt in ihrem radialen Krümmungsverlauf aufweist, nämlich zwischen einem ersten, radial inneren Teilabschnitt (24) des radial inneren Abschnitts (22), in welchem die Stapelachse konkav zur Druckseite gekrümmt ist, und einem zweiten; radial äußeren Teilabschnitt (23) des radial inneren Abschnitts (22), in welchem die Stapelachse konkav zur Saugseite gekrümmt ist, **dadurch gekennzeichnet, dass** das Schaufelblatt ein innen-deckbandloses Schaufelblatt ist und dass in dem ersten, radial inneren Teilabschnitt (24) des radial inneren Abschnitts (22) die Neigung der Stapelachse von radial außen nach radial innen derart abnimmt, dass im Bereich einer radial inneren Schaufelspitze, die zu einer Nabe eines Rotors durch einen Laufspalt beabstandet ist, die Stapelachse sich im Wesentlichen in Radialrichtung erstreck.

2. Leitschaufel nach Anspruch 1, **dadurch gekennzeichnet, dass** der einzige Wendepunkt der Stapelachse in ihrem radialen Krümmungsverlauf, der zwischen dem ersten, radial inneren Teilabschnitt (24) des radial inneren Abschnitts (22) und dem zweiten, radial äußeren Teilabschnitt (23) des radial inneren Abschnitts (22) ausgebildet ist, von radial innen nach radial außen gesehen zwischen in etwa 15% und in etwa 40% der radialen Länge des Schaufelblatts liegt.

3. Leitschaufel nach Anspruch 1 oder 2, **dadurch gekennzeichnet, dass** sich der erste, radial innere Teilabschnitt (24) des radial inneren Abschnitts (22) von radial innen nach radial außen gesehen zwischen in etwa 0% und in etwa 40% der radialen Länge des Schaufelblatts erstreckt.

4. Leitschaufel nach einem der Ansprüche 1 bis 3, **dadurch gekennzeichnet, dass** sich der zweite, radial äußere Teilabschnitt (23) des radial inneren Abschnitts (22) von radial innen nach radial außen gesehen zwischen in etwa 15% und in etwa 60% der radialen Länge des Schaufelblatts erstreckt.

5. Leitschaufel nach einem der Ansprüche 1 bis 4, **dadurch gekennzeichnet, dass** sich der radial äußere Abschnitt (20) des Schaufelblatts (10) von radial innen nach radial außen gesehen sich zwischen in etwa 40% und in etwa 100% der radialen Länge des Schaufelblatts erstreckt.

6. Leitschaufel nach einem der Ansprüche 1 bis 5, **dadurch gekennzeichnet, dass** in dem radial äußeren Abschnitt (20) des Schaufelblatts (10) die Stapelachse sich im Wesentlichen in Radialrichtung erstreckt und dieselbe demnach im Wesentlichen nicht gekrümmt ist.

7. Leitschaufel nach einem der Ansprüche 1 bis 5, **dadurch gekennzeichnet, dass** in dem radial äußeren Abschnitt (20) des Schaufelblatts (10) die Stapelachse konkav zur Saugseite gekrümmt ist, sodass derselbe eine Verlängerung des zweiten, radial äußeren Teilabschnitts (23) des radial inneren Abschnitts (22) bildet bzw. darstellt.

## Claims

1. A guide blade of a compressor, wherein the blade (10) of the guide blade being without an inner shroud has a flow inlet edge (12), a flow outlet edge (13), a suction side (14), and a pressure side (15), wherein the blade (10) is formed by a plurality of blade sections stacked one on the other in the radial direction, with the centers of gravity of said blade sections extending along a stacking axis, wherein the blade sections are stacked one on the other in the radial direction in such a way that, in a radially inner section (22) of the blade (10) connected to a radially outer section (20) of the blade (10), the stacking axis has its only inflection point in its radial curvature progression, namely between a first, radially inner sub-section (24) of the radially inner section (22), in which the stacking axis is curved concavely toward the pressure side, and a second, radially outer sub-section (23) of the radially inner section (22), in which the stacking axis is curved concavely toward the suction side, **characterized in that** the blade is a blade being without an inner shroud and that, in the first, radially inner sub-section (24) of the radially inner section (22), the inclination of the stacking axis decreases from radially outwards to radially inwards in such a way that the stacking axis extends substantially in the radial direction in the area of a radially inner blade tip, which is spaced to a center of a rotor by means of a running clearance.

2. The guide blade according to claim 1, **characterized in that** the only inflection point of the stacking axis in its radial curvature progression, which is formed between the first, radially inner sub-section (24) of the radially inner section (22) and the second, radially outer sub-section (23) of the radially inner section (22), is positioned between approximately 15% and approximately 40% of the radial length of the blade, when viewed from radially inwards to radially outwards.

3. The guide blade according to claim 1 or 2, **characterized in that** the first, radially inner sub-section (24) of the radially inner section (22) extends between approximately 0% and approximately 40% of the radial length of the blade, when viewed from radially inwards to radially outwards.

4. The guide blade according to any one of claims 1 to 3, **characterized in that** the second, radially outer sub-section (23) of the radially inner section (22) extends between approximately 15% and approximately 60% of the radial length of the blade, when viewed from radially inwards to radially outwards.

5. The guide blade according to any one of claims 1 to 4, **characterized in that** the radially outer section (20) of the blade (10) extends between approximately 40% and approximately 100% of the radial length of the blade, when viewed from radially inwards to radially outwards.

6. The guide blade according to any one of claims 1 to 5, **characterized in that**, in the radially outer section (20) of the blade (10), the stacking axis extends substantially in the radial direction and said stacking axis is thereby substantially not curved.

7. The guide blade according to any one of claims 1 to 5, **characterized in that**, in the radially outer section (20) of the blade (10), the stacking axis is curved concavely towards the suction side, such that said stacking axis forms or constitutes an extension of the second, radially outer sub-section (23) of the radially inner section (22).

## Revendications

1. Aube directrice d'un compresseur, dans laquelle une pale (10) de celui-ci présente un bord d'attaque d'écoulement (12), un bord de fuite d'écoulement (13), un extrados (14) et un intrados (15), dans laquelle la pale (10) est formée d'une pluralité de sections de pale empilées l'une sur l'autre dans la direction radiale, dont les centres de gravité s'étendent le long d'un axe d'empilement, dans laquelle les sections de pale sont empilées l'une sur l'autre dans la direction radiale de sorte que, dans une section radialement interne (22) de la pale (10), se raccordant à une section radialement externe (20) de la pale (10), l'axe d'empilement présente son point d'inflexion individuel dans son profil de courbure radial, à savoir entre une première section partielle radialement interne (24) de la section radialement interne (22), dans laquelle l'axe d'empilement est recourbé de manière concave vis-à-vis de l'intrados, et une seconde section partielle radialement externe (23) de la section radialement interne (22), dans laquelle l'axe d'empilement est recourbé de manière concave vis-à-vis de l'extrados, **caractérisée en ce que** la pale est une pale sans anneau de renfort interne et, dans la première section partielle radialement interne (24) de la section radialement interne (22), l'inclinaison de l'axe d'empilement diminue de radialement externe à radialement interne en sorte que, dans la zone d'une pointe de pale radialement interne, qui est espacée d'un moyeu d'un rotor par un entrefer, l'axe d'empilement s'étende sensiblement dans la direction radiale.

2. Aube directrice selon la revendication 1, **caractérisée en ce que** le point d'inflexion individuel de l'axe d'empilement se situe dans son profil de courbure radial, qui est formé entre la première section partielle radialement interne (24) de la section radialement interne (22) et la seconde section partielle radialement externe (23) de la section radialement interne (22), en observant de radialement interne à radialement externe entre environ 15 % et environ 40 % de la longueur radiale de la pale.

3. Aube directrice selon la revendication 1 ou 2, **caractérisée en ce que** la première section partielle radialement interne (24) de la section radialement interne (22) s'étend, en observant de radialement interne à radialement externe, entre environ 0 % et environ 40 % de la longueur radiale de la pale.

4. Aube directrice selon l'une quelconque des revendications 1 à 3, **caractérisée en ce que** la seconde section partielle radialement externe (23) de la section radialement interne (22) s'étend en observant de radialement interne à radialement externe entre environ 15 % et environ 60 % de la longueur radiale de la pale.

5. Aube directrice selon l'une quelconque des revendications 1 à 4, **caractérisée en ce que** la section radialement externe (20) de la pale (10) s'étend en observant de radialement interne à radialement externe entre environ 40 % et environ 100 % de la longueur radiale de la pale.

6. Aube directrice selon l'une quelconque des revendications 1 à 5, **caractérisée en ce que,** dans la section radialement externe (20) de la pale (10), l'axe d'empilement s'étend sensiblement dans la direction radiale et n'est sensiblement pas recourbé ensuite.

7. Aube directrice selon l'une quelconque des revendications 1 à 5, **caractérisée en ce que,** dans la section radialement externe (20) de la pale (10), l'axe d'empilement est recourbé de manière concave vis-à-vis de l'extrados de sorte que celui-ci forme ou représente un prolongement de la seconde section partielle radialement externe (23) de la section radialement interne (22).
